# EUROPÄISCHE PATENTSCHRIFT

(11) **EP 3 083 728 B1**
(45) Veröffentlichungstag und Bekanntmachung des Hinweises auf die Patenterteilung: **07.02.2018**
(21) Anmeldenummer: 14821111.3
(22) Anmeldetag: 15.12.2014
(51) Int. Cl.: C08F 218/08, C08F 2/20, C08F 261/04, C09J 151/00

(54) **VERFAHREN ZUM APPLIZIEREN VON DISPERSIONSKLEBSTOFFEN**
PROCESS FOR THE APPLICATION OF ADHESIVE DISPERSIONS
PROCÉDÉ D'APPLICATION D'ADHÉSIFS EN DISPERSION

(30) Priorität: 16.12.2013 DE 102013226114
(43) Veröffentlichungstag der Anmeldung: 26.10.2016
(73) Patentinhaber: Wacker Chemie AG, 81737 München (DE)
(72) Erfinder: BABAR, Muhammad, 84489 Burghausen (DE); SEIDEL, Jessica, 84539 Zangberg (DE); KÖGLER, Gerhard, 84508 Burgkirchen (DE)
(74) Vertreter: Ege, Markus
(86) Internationale Anmeldenummer: PCT/EP2014/077799
(87) Internationale Veröffentlichungsnummer: WO 2015/091379

(56) Entgegenhaltungen:
- EP-A2- 1 887 018
- US-A- 5 182 328

## Beschreibung

Die Erfindung betrifft Verfahren zum Applizieren von Dispersionsklebstoffen enthaltend ein oder mehrere Polyvinylester mittels maschineller Auftragsverfahren, insbesondere Fließbandverfahren, wie Düsen- oder Walzen-Auftragsverfahren, sowie Polyvinylester in Form von wässrigen Dispersionen oder in Wasser redispergierbaren Pulvern.

Dispersionsklebstoffe auf Basis von Polyvinylestern finden vielfache Anwendungen, beispielsweise zur Verklebung von Papier oder Kartonagen zur Herstellung von Faltschachteln, Briefumschlägen, Prospekten oder Zigaretten. Derartige Produkte werden üblicherweise in industriellem Maßstab in Fließbandfertigung hergestellt. Die Dispersionsklebstoffe werden hierbei in der Regel mittels maschineller Auftragsverfahren, wie Düsenauftragssystemen oder Walzentechnologien, auf das Substrat appliziert. Bei diesen Auftragsverfahren führen Verunreinigungen durch Klebstoff, welche durch unpräzisen oder unkontrollierten Klebstoffauftrag, auch als sogenanntes "Spritzen" bezeichnet, verursacht werden, zu Problemen in der Fertigung. Gelangt Klebstoff auf das Transportband, so kann dies zu Anhaftungen des gefertigten Materials führen, was zu Ausfallzeiten der Maschine und aufwändigen Reinigungsarbeiten führt. Während des Düsenauftrags bilden sich häufig zapfenförmige Ablagerungen an der Austrittsstelle der Düse, wodurch der aus der Düse austretende Klebstoffstrahl abgelenkt wird. Dies ist abträglich für eine exakte Steuerung des Klebstoffauftrags und kann auch zur Verschmutzung und schließlich zum Stillstand der Anlage führen. In Düsenauftragssystemen werden die Dispersionsklebstoffe mittels Pumpen durch Leitungssysteme einer Düse mit einem schnell öffnendem und schließendem Ventil zugeführt, beispielsweise mit Schaltfrequenzen von bis zu 1000/Sekunde. Solch hohe Taktfrequenzen der Düsenventile setzen die Dispersionsklebstoffe im Inneren der Düse extrem hohen Scherkräften aus. Geeignete Dispersionsklebstoffe müssen dementsprechend sehr scherstabil sein.

Aus der EP-A 1889890 wie auch aus der EP-A 1887018 ist eine Reihe von Emulgator-stabilisierten Vinylacetat-Ethylen-Pölymerdispersionen für maschinelle Auftragsverfahren bekannt. Es besteht aber weiterhin Bedarf an Dispersionsklebstoffen, mit denen die Anforderungen von maschinellen Auftragsverfahren noch besser erfüllt werden.

Vor diesem Hintergrund bestand die Aufgabe, neue Maßnahmen bereitzustellen, mit denen ein oder mehrere der oben genannten Probleme beim Applizieren von Dispersionsklebstoffen mittels maschineller Auftragsverfahren vermieden oder reduziert werden können.

Gegenstand der Erfindung sind Verfahren zum Applizieren von Klebstoffen in Form von wässrigen Dispersionen (Dispersionsklebstoffe) enthaltend ein oder mehrere Polyvinylester und gegebenenfalls ein oder mehrere Zusatzstoffe mittels maschineller Auftragsverfahren, dadurch gekennzeichnet, dass
die Polyvinylester mit mindestens zwei Polyvinylalkoholen stabilisiert sind, wobei
mindestens ein Polyvinylalkohol eine Viskosität von 36 bis 60 mPas (hochviskoser Polyvinylalkohol) und
mindestens ein Polyvinylalkohol eine Viskosität von 19 bis 35 mPas (mittelviskoser Polyvinylalkohol) hat.

Ein weiterer Gegenstand der Erfindung sind Polyvinylester in Form von wässrigen Dispersionen oder in Wasser redispergierbaren Pulvern, dadurch gekennzeichnet, dass die Polyvinylester erhältlich sind mittels radikalisch initiierter Polymerisation von Monomeren bestehend aus
a) einem oder mehreren Vinylestern,
gegebenenfalls b1) einem oder mehreren Olefinen, gegebenenfalls b2) einem oder mehreren ethylenisch ungesättigten Monomeren ausgewählt aus der Gruppe bestehend aus (Meth)-acrylsäureestern, Vinylaromaten, 1,3-Dienen und Vinylhalogeniden und
gegebenenfalls 0 bis 10 Gew.-%, bezogen auf das Gesamtgewicht der Monomere, Hilfsmonomeren ausgewählt aus der Gruppe bestehend aus ethylenisch ungesättigten Mono- und Dicarbonsäuren, ethylenisch ungesättigten Carbonsäurenitrilen, Mono- und Diestern der Fumarsäure und Maleinsäure, ethylenisch ungesättigten Sulfonsäuren oder deren Salze, mehrfach ethylenisch ungesättigten Comonomeren, epoxidfunktionellen Comonomeren, siliciumfunktionellen Comonomeren, Hydroxyethyl-, Hydroxypropyl- oder Hydroxybutylacrylat und -methacrylat, Diacetonacrylamid, Acetylacetoxyethylacrylat und Acetylacetoxyethylmethacrylat, wobei die Polyvinylester mit mindestens zwei Polyvinylalkoholen stabilisiert sind, wobei
mindestens ein Polyvinylalkohol eine Viskosität von 36 bis 60 mPas ein hochviskoser Polyvinylalkohol und mindestens ein Polyvinylalkohol eine Viskosität von 19 bis 35 mPas ein mittelviskoser Polyvinylalkohol hat, wobei sämtliche mittelviskosen Polyvinylalkohole einen Verseifungsgrad von ≤ 94% haben und 1 bis 30 Gew.-%, bezogen auf das Gesamtgewicht der Polyvinylalkohole, hochviskose Polyvinylalkohole sind.
Solche Dispersionen oder Pulver von Polyvinylestern sind für das erfindungsgemäße Verfahren und zur Lösung der erfindungsgemäßen Aufgabe in besonderer Weise geeignet.
Die Angaben zu den Viskositäten von Polyvinylalkoholen beziehen sich in der vorliegenden Anmeldung auf die Höppler-Viskosität, jeweils bestimmt bei 20°C gemäß DIN 53015 in 4 %iger wässriger Lösung.
Der hochviskose Polyvinylalkohol hat vorzugsweise eine Viskosität von 38 bis 55 mPas und besonders bevorzugt 40 bis 55 mPas. Der Anteil der hochviskosen Polyvinylalkohole beträgt vorzugsweise 1 bis 30 Gew.-%, besonders bevorzugt 2 bis 20 Gew.-% und am meisten bevorzugt 3 bis 10 Gew.-%, jeweils bezogen auf das Gesamtgewicht der Polyvinylalkohole. Der Anteil der hochviskosen Polyvinylalkohole beträgt vorzugsweise 0,01 bis 1,8 Gew.-%, besonders bevorzugt 0,1 bis 1,2 Gew.-%, am meisten bevorzugt 0,15 bis 0,6 Gew.-%, jeweils bezogen auf das Trockengewicht der Polyvinylester.
Der mittelviskose Polyvinylalkohol hat eine Viskosität von vorzugsweise 20 bis 35 mPas, besonders bevorzugt von 21 bis 30 mPas und am meisten bevorzugt von 23 bis 27 mPas. Der Anteil der mittelviskosen Polyvinylalkohole beträgt vorzugsweise 30 bis 99 Gew.-%, besonders bevorzugt 35 bis 80 Gew.-% und am meisten bevorzugt 40 bis 70 Gew.-%, jeweils bezogen auf das Gesamtgewicht der Polyvinylalkohole. Der Anteil der mittelviskosen Polyvinylalkohole beträgt vorzugsweise 0,5 bis 6,0 Gew.-%, besonders bevorzugt 1,0 bis 5,0 Gew.-% und am meisten bevorzugt 2,0 bis 4 Gew.-%, jeweils bezogen auf das Trockengewicht der Polyvinylester.

Die Gesamtmenge an hochviskosen Polyvinylalkoholen und mittelviskosen Polyvinylalkoholen beträgt vorzugsweise 0,6 bis 6 Gew.-%, besonders bevorzugt 1 bis 5 Gew.-% und am meisten bevorzugt 1,5 bis 4,5 Gew.-% jeweils bezogen auf das Trockengewicht der Polyvinylester.

Gegebenenfalls können die Polyvinylesterdispersionen zusätzlich ein oder mehrere niederviskose Polyvinylalkohole enthalten. Niederviskose Polyvinylalkohole haben Viskositäten von vorzugsweise 1 bis 18 mPas, mehr bevorzugt von 1 bis 15 mPas, besonders bevorzugt 1 bis 10 mPas und am meisten bevorzugt von 2 bis 8 mPas. Der Anteil der niederviskosen Polyvinylalkohole beträgt vorzugsweise 0 bis 60 Gew.-%, besonders bevorzugt 10 bis 50 Gew.-% und am meisten bevorzugt 20 bis 40 Gew.-%, jeweils bezogen auf das Gesamtgewicht der Polyvinylalkohole. Der Anteil der niederviskosen Polyvinylalkohole beträgt vorzugsweise 0 bis 4,0 Gew.-%, besonders bevorzugt 0,5 bis 3,5 Gew.-% und am meisten bevorzugt 1 bis 3 Gew.-%, jeweils bezogen auf das Trockengewicht der Polyvinylester.

In einer besonders bevorzugten Ausführungsform sind die Polyvinylester mit mindestens drei Polyvinylalkoholen stabilisiert, insbesondere mit mindestens einem hochviskosen Polyvinylalkohol, mindestens einem mittelviskosen Polyvinylalkohol und mindestens einem niederviskosen Polyvinylalkohol.

Rein klarstellend sei angemerkt, dass hochviskose Polyvinylalkohole, mittelviskose Polyvinylalkohole und niederviskose Polyvinylalkohole in der vorliegenden Anmeldung auch gemeinsam als Polyvinylalkohole bezeichnet werden.

Die Polyvinylalkohole können teilverseift oder vollverseift sein. Bevorzugt sind teilverseifte Polyvinylalkohole, insbesondere die mittelviskosen Polyvinylalkohole. Der Hydrolysegrad der Polyvinylalkohole beträgt vorzugweise 80 bis 94 Mol-%, besonders bevorzugt 83 bis 92 Mol-% und am meisten bevorzugt 85 bis 90 Mol-%.

Die Polyvinylalkohole sind vorzugsweise ausschließlich aus Vinylalkohol-Einheiten und Vinylacetat-Einheiten aufgebaut. Es können aber auch teilverseifte, hydrophob modifizierte Polyvinylalkohole eingesetzt werden, vorzugsweise werden jedoch keine hydrophob modifizierten Polyvinylalkohole eingesetzt. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0,1 bis 10 Gew.-%, bezogen auf das Gesamtgewicht des teilverseiften Polyvinylalkohols. Es können auch Gemische der genannten Polyvinylalkohole eingesetzt werden. Weitere bevorzugte Polyvinylalkohole sind teilverseifte, hydrophobierte Polyvinylalkohole, die durch polymeranaloge Umsetzung, beispielsweise Acetalisierung der Vinylalkoholeinheiten mit C₁- bis C₄-Aldehyden wie Butyraldehyd erhalten werden. Der Anteil der hydrophoben Einheiten beträgt vorzugsweise 0,1 bis 10 Gew.-%, bezogen auf das Gesamtgewicht des teilverseiften Polyvinylacetats. Die genannten Polyvinylalkohole sind mittels dem Fachmann bekannter Verfahren zugänglich.

Die Polyvinylester sind im Allgemeinen erhältlich mittels radikalisch initiierter Polymerisation von a) einem oder mehreren Vinylestern und gegebenenfalls b) einem oder mehreren weiteren ethylenisch ungesättigten Monomeren.

Geeignete Vinylester a) sind beispielsweise solche von Carbonsäuren mit 1 bis 22 C-Atomen, insbesondere 1 bis 12 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9R oder VeoValOR (Handelsnamen der Firma Momentive). Besonders bevorzugt ist Vinylacetat.

Die Vinylester a) werden in einer Menge von vorzugsweise 50 bis 100 Gew.-%, besonders bevorzugt 70 bis 95 Gew.-% und am meisten bevorzugt 80 bis 90 Gew.-%, jeweils bezogen auf das Gesamtgewicht der Monomere, eingesetzt.

Als weitere ethylenisch ungesättigte Monomere b1) werden insbesondere ein oder mehrere Olefine, wie Propylen oder vorzugsweise Ethylen, ausgewählt.

Die Monomere b1) werden in einer Menge von vorzugsweise 5 bis 40 Gew.-%, besonders bevorzugt 5 bis 30 Gew.-% und am meisten bevorzugt 10 bis 20 Gew.-%, jeweils bezogen auf das Gesamtgewicht der Monomere, copolymerisiert.

Als weitere ethylenisch ungesättigte Monomere b2) können auch, gegebenenfalls in Kombination mit einem oder mehreren Olefinen, wie Ethylen, ein oder mehrere ethylenisch ungesättigte Monomere ausgewählt werden aus der Gruppe umfassend (Meth)acrylsäureester, Vinylaromaten, 1,3-Diene und Vinylhalogenide.

Geeignete Monomere aus der Gruppe der Ester der Acrylsäure oder Methacrylsäure sind beispielsweise Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat. Besonders bevorzugt sind Methylacrylat, Methylmethacrylat, n-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Diene sind 1,3-Butadien und Isopren.

Die Monomere b2) werden in einer Menge von vorzugsweise 0 bis 45 Gew.-% und besonders bevorzugt 10 bis 30 Gew.-%, jeweils bezogen auf das Gesamtgewicht der Monomere, copolymerisiert. Am meisten bevorzugt werden keine Monomere b2) copolymerisiert.

Gegebenenfalls können noch 0 bis 10 Gew.-%, insbesondere 0,05 bis 10 Gew.-%, bezogen auf das Gesamtgewicht des Monomergemisches, Hilfsmonomere copolymerisiert werden. Am meisten bevorzugt werden jedoch keine Hilfsmonomere copolymerisiert. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäurenitrile, vorzugsweise Acrylnitril; Mono- und Diester der Fumarsäure und Maleinsäure wie die Diethyl-, und Diisopropylester, ethylenisch ungesättigte Sulfonsäuren bzw. deren Salze, vorzugsweise Vinylsulfonsäure, 2-Acrylamido-2-methyl-propansulfonsäure. Weitere Beispiele sind mehrfach ethylenisch ungesättigte Comonomere, beispielsweise Divinyladipat, Diallylmaleat, Allylmethacrylat, Triallylisocyanurat oder Triallylcyanurat. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Bevorzugt werden ein oder mehrere Polyvinylester ausgewählt aus der Gruppe umfassend Vinylester-Homopolymerisate, Vinylester-Ethylen-Mischpolymerisate, Vinylester-Mischpolymerisate enthaltend eine oder mehrere Vinylester-Einheiten und ein oder mehrere weitere Monomereinheiten aus der Gruppe umfassend Vinylaromaten, Vinylhalogenide, Acrylsäureester, Methacrylsäureester sowie gegebenenfalls Ethylen.

Beispiele für bevorzugte Vinylester-Mischpolymerisate basieren auf 50 bis 90 Gew.-% an einem oder mehreren Vinylestern, 10 bis 20 Gew.-% Ethylen und gegebenenfalls 1 bis 40 Gew.-% an einem oder mehreren weiteren Monomeren, bezogen auf das Gesamtgewicht der Monomere.

Bevorzugt werden auch Comonomergemische von Vinylacetat mit 10 bis 20 Gew.-% Ethylen; sowie Comonomermischungen von Vinylacetat mit 10 bis 20 Gew.-% Ethylen und 1 bis 40 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 11 C-Atomen wie VeoVa9, VeoVa10, VeoVa11; und Gemische von Vinylacetat, 10 bis 20 Gew.-% Ethylen und vorzugsweise 1 bis 40 Gew.-% Acrylsäureester von unverzweigten oder verzweigten Alkoholen mit 1 bis 15 C-Atomen, insbesonders n-Butylacrylat oder 2-Ethylhexylacrylat; und Gemische mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% Acrylsäureester von unverzweigten oder verzweigten Alkoholen mit 1 bis 15 C-Atomen, insbesonders n-Butylacrylat oder 2-Ethylhexylacrylat, welche noch 10 bis 20 Gew.-% Ethylen enthalten; sowie Gemische mit Vinylacetat, 10 bis 20 Gew.-% Ethylen und 1 bis 60 Gew.-% Vinylchlorid; wobei die Gemische noch die genannten Hilfsmonomere in den genannten Mengen enthalten können, und sich die Angaben in Gew.-% auf jeweils 100 Gew.-% aufaddieren.

Die Polyvinylester sind vorzugsweise bimodal oder mehrmodal. Die Polyvinylester in Form von wässrigen Dispersionen weisen bei einem Feststoffgehalt von 50% in Wasser eine Viskosität von vorzugsweise 1000 bis 8000 mPas, besonders bevorzugt 2000 bis 7000 mPas und am meisten bevorzugt 3000 bis 6000 mPas auf (bestimmt mit einem Brookfieldviskosimeter, bei 23°C und 20 Upm, unter Einsatz der für den jeweiligen Viskositätsbereich vom Fachmann üblicherweise eingesetzten Spindel).

Die Polyvinylester haben Glasübergangstemperaturen Tg von vorzugsweise -20°C bis +40°C, mehr bevorzugt -10°C bis +30°C, besonders bevorzugt von 0°C bis +15°C und am meisten bevorzugt von +1°C bis +10°C. Die Monomerauswahl bzw. die Auswahl der Gewichtsanteile der Comonomere erfolgt dabei so, dass die vorgenannten Glasübergangstemperaturen Tg resultieren. Die Glasübergangstemperatur Tg der Polymerisate wird bestimmt mittels dem dynamischen Differenzkalorimeter DSC1 der Firma Mettler-Toledo im offenen Tiegel bei einer Heizrate von 10 K/min. Ausgewertet wird der Mittelpunkt des Glasübergangs beim 2. Heizzyklus. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Polyvinylester erfolgt vorzugsweise nach dem Emulsionspolymerisationsverfahren. Die Emulsionspolymerisation erfolgt üblicherweise in wässrigem Medium, d.h. üblicherweise in Abwesenheit von organischen Lösungsmitteln. Bei der Copolymerisation von gasförmigen Comonomeren wie Ethylen, 1,3-Butadien oder Vinylchlorid kann auch unter Druck, im Allgemeinen zwischen 5 bar und 100 bar, vorzugsweise zwischen 65 und 80 bar, gearbeitet werden. Die Polymerisationstemperatur beträgt im Allgemeinen 40°C bis 100°C, vorzugsweise 50°C bis 80°C und besonders bevorzugt 60 bis 70°C.

Die Initiierung der Polymerisation erfolgt vorzugsweise mit den für die Emulsionspolymerisation gebräuchlichen Redox-Initiator-Kombinationen. Beispiele für geeignete Oxidationsinitiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid, Azobisisobutyronitril. Besonders bevorzugt werden die Natrium-, Kalium- und Ammoniumsalze der Peroxodischwefelsäure und Wasserstoffperoxid. Die genannten Initiatoren werden im Allgemeinen in einer Menge von 0,01 bis 2,0 Gew.-%, bezogen auf das Gesamtgewicht der Monomere, eingesetzt. Die genannten Oxidationsmittel, insbesondere die Salze der Peroxodischwefelsäure, können auch alleinig als thermische Initiatoren eingesetzt werden.

Geeignete Reduktionsmittel sind beispielsweise die Sulfite und Bisulfite der Alkalimetalle und von Ammonium, wie Natriumsulfit, die Derivate der Sulfoxylsäure wie Zink- oder Alkaliformaldehydsulfoxylate, beispielsweise Natriumhydroxymethansulfinat (Brüggolit), (Iso)Ascorbinsäure oder deren Salze, und Gemische der Salze der 2-Hydroxy-2-Sulfinato-Essigsäure und 2-Hydroxy-2-Sulfonato-Essigsäure mit Natriumsulfit (FF6). Bevorzugt werden Natriumsulfit, Natriumbisulfit und insbesondere (Iso)Ascorbinsäure oder deren (Erd)Alkalisalze und FF6. Die Reduktionsmittelmenge beträgt vorzugsweise 0,015 bis 3 Gew.-%, bezogen auf das Gesamtgewicht der Monomere.

Die Polymerisation wird üblicherweise bei pH-Werten von ≤ 9, bevorzugt 2 bis 9 und besonders bevorzugt 3 bis 8 durchgeführt. Die Einstellung des pH-Wertes kann mit den gängigen Maßnahmen, wie Säuren, Basen oder insbesondere Puffern, wie Natriumacetat oder Phospate, erfolgen.

Zur Steuerung des Molekulargewichts können während der Polymerisation regelnde Substanzen eingesetzt werden. Falls Regler eingesetzt werden, werden diese üblicherweise in Mengen zwischen 0,01 bis 5,0 Gew.-%, bezogen auf das Gesamtgewicht der zu polymerisierenden Monomere, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd. Vorzugsweise werden keine regelnden Substanzen verwendet.

Die Polymerisation kann beispielsweise in Gegenwart der eingangs genannten Polyvinylalkohole und/oder gegebenenfalls ein oder mehrerer weiterer Schutzkolloide erfolgen. Vorzugsweise wird jedoch auf weitere Schutzkolloide verzichtet. Die Dispersionsklebstoffe bzw. die Polyvinylester in Form von wässrigen Dispersionen oder in Wasser redispergierbaren Pulver enthalten also neben Polyvinylalkoholen vorzugsweise keine weiteren Schutzkolloide. Beispiele für weitere Schutzkolloide sind Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Die Polyvinylalkohole und die gegebenenfalls eingesetzten weiteren Schutzkolloide werden insgesamt im Allgemeinen in einer Menge von insgesamt 0,5 bis 20 Gew.-%, bezogen auf das Gesamtgewicht der Monomere, bei der Emulsionspolymerisation zugesetzt.

Im Emulsionspolymerisationsverfahren kann auch in Gegenwart von Emulgatoren polymerisiert werden. Bevorzugte Mengen an Emulgatoren sind 0 bis 7 Gew.-%, insbesondere 1 bis 7 Gew.-%, bezogen auf das Gesamtgewicht der Monomere. Besonders bevorzugt werden jedoch keine Emulgatoren eingesetzt. Besonders bevorzugte Dispersionsklebstoffe bzw. Polyvinylester in Form von wässrigen Dispersionen oder in Wasser redispergierbaren Pulver enthalten also keine Emulgatoren.

Beispiele für Emulgatoren sind anionische, kationische oder nichtionische Emulgatoren. Beispiele für anionische Emulgatoren sind Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen. Beispiele für nichtionische Emulgatoren sind Alkylpolyglykolether oder Alkylarylpolyglykolether mit 8 bis 40 Ethylenoxid-Einheiten.

Die Polymerisation kann in herkömmlichen Polymerisationsreatoren, beispielsweise in Druckreaktoren und/oder Drucklosreaktoren durchgeführt werden. Als Druckreaktoren bzw. Drucklosreaktoren können die herkömmlichen, entsprechend dimensionierten Stahlreaktoren mit Rühreinrichtung, Heiz-/Kühlsystemen sowie Leitungen zur Zuführung der Edukte bzw. Abführung der Produkte eingesetzt werden. Bei Einsatz von gasförmigen Monomeren, wie Ethylen, wird vorzugsweise ein Druckreaktor und gegebenenfalls zusätzlich ein Drucklosreaktor verwendet. Der bevorzugte Arbeitsdruck im Druckreaktor beträgt 3 bis 120 bar, besonders bevorzugt 10 bis 80 bar. Der bevorzugte Arbeitsdruck im Drucklosreaktor beträgt 100 mbar bis 5 bar, besonders bevorzugt 200 mbar bis 1 bar.

Die Polymerisation wird vorzugsweise in Batch- oder Semibatch-Verfahren durchgeführt, kann aber auch in kontinuierlichem Verfahren erfolgen.

Im Batch- oder Semibatch-Verfahren können die Monomere beispielsweise insgesamt vorgelegt oder zudosiert werden. Vorzugsweise wird so vorgegangen, dass 20 bis 100 Gew.-%, insbesondere mehr als 70 Gew.-%, bezogen auf das Gesamtgewicht, der Monomere, vorgelegt und die verbleibende Restmenge an Monomeren zu einem späteren Zeitpunkt während der Emulsionspolymerisation zudosiert wird. Die Dosierungen können separat (räumlich und zeitlich) durchgeführt werden, oder die zu dosierenden Komponenten können alle oder teilweise voremulgiert dosiert werden.

Die Polyvinylalkohole und die gegebenenfalls eingesetzten weiteren Schutzkolloide können beispielsweise vollständig vorgelegt oder teilweise dosiert werden. Vorzugsweise werden mindestens 25 Gew.-%, besonders bevorzugt mindestens 70 Gew.-% der Polyvinylalkohole und der etwaigen weiteren Schutzkolloide vorgelegt, jeweils bezogen auf die insgesamt eingesetzte Menge an Polyvinylalkoholen und, falls vorhanden, an weiteren Schutzkolloiden. Am meisten bevorzugt werden die Polyvinylalkohole und die etwaigen weiteren Schutzkolloide vollständig vorgelegt. Insbesondere die hochviskosen und/oder mittelviskosen Polyvinylalkohole werden bevorzugt auf die eben beschriebene Weise vorgelegt.

Die Initiatoren können beispielsweise sowohl vollständig vorgelegt werden, als auch teilweise dosiert werden. Vorzugsweise werden die Initiatoren vollständig vorgelegt.

Vorzugsweise wird nach Abschluss der Polymerisation noch eine Nachpolymerisation durchgeführt. Bei der Nachpolymerisation werden verbliebene Mengen an Restmonomer polymerisiert. Die Nachpolymerisation erfolgt in Anwendung bekannter Methoden, im Allgemeinen mit Redoxkatalysator initiierter Nachpolymerisation.

Flüchtige Verbindungen, wie Restmonomer oder Verunreinigungen durch Initiatorkomponenten oder andere Rohstoffe, können auch mittels Destillation oder Strippen aus der wässrigen Dispersion entfernt werden. Beim Strippen werden, gegebenenfalls unter reduziertem Druck, unter Durchleiten oder Überleiten von inerten Schleppgasen, wie Luft, Stickstoff oder Wasserdampf, flüchtige Verbindungen aus den Dispersionen entfernt.

Die so erhältlichen Polyvinylester in Form von wässrigen Dispersionen haben einen Feststoffgehalt von 30 bis 75 Gew.-%, vorzugsweise von 50 bis 60 Gew.-%.

Bevorzugt sind auch Polyvinylester in Form von in Wasser redispergierbaren Pulvern, insbesondere in Form von Schutzkolloidstabilisierten, in Wasser redispergierbaren Pulvern. Zur Herstellung der Polyvinylester in Form von in Wasser redispergierbaren Pulvern werden die wässrigen Dispersionen, gegebenenfalls nach Zusatz von Schutzkolloiden als Trocknungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C, je nach Anlage, Tg des Harzes und gewünschtem Trocknungsgrad, gewählt.

In der Regel wird die Trocknungshilfe in einer Gesamtmenge von 3 bis 30 Gew.-%, bezogen auf die polymeren Bestandteile der Dispersion, eingesetzt. Das heißt, die Gesamtmenge an Schutzkolloid vor dem Trocknungsvorgang soll allgemein mindestens 3 bis 30 Gew.-%, bezogen auf den Polymeranteil betragen; bevorzugt werden 5 bis 20 Gew.-%, bezogen auf den Polymeranteil, eingesetzt.

Geeignete Trocknungshilfen sind beispielsweise teilverseifte Polyvinylalkohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt sind Polyvinylalkohole. Besonders bevorzugt werden keine weiteren Schutzkolloide als Polyvinylalkohole als Trocknungshilfe eingesetzt.

Bei der Verdüsung hat sich vielfach ein Gehalt von bis zu 1,5 Gew.-% Antischaummittel, bezogen auf die Vinylacetat-Copolymere, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 µm.

Die Viskosität der zu verdüsenden Speise wird über den Feststoffgehalt so eingestellt, dass im Allgemeinen ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt im Allgemeinen > 35%, bevorzugt > 45%.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Die erfindungsgemäßen wässrigen Dispersionen bzw. Dispersionsklebstoffe haben einen Feststoffgehalt von vorzugsweise 30 bis 75 Gew.-%, besonders bevorzugt 50 bis 60 Gew.-%. Bei den verbleibenden Anteilen handelt es sich vorzugsweise um Wasser. Die Mengen an Feststoff und Wasser summieren sich insgesamt zu 100 Gew.-%.

Die Dispersionsklebstoffe enthalten vorzugsweise mindestens 40 Gew.-%, besonders bevorzugt mindestens 50 Gew.-% und am meisten bevorzugt 60 Gew.-% Polyvinylester. Die Dispersionsklebstoffe enthalten vorzugsweise höchstens 99 Gew.-% und besonders bevorzugt höchstens 95 Gew.-% Polyvinylester. Die Angaben in Gew.-% beziehen sich jeweils auf das Trockengewicht der Dispersionsklebstoffe.

Gegebenenfalls enthalten die Dispersionsklebstoffe noch ein oder mehrere Zusätze, beispielsweise Weichmacher, wie Phtalate, Benzoate oder Adipate, Filmbildehilfsittel, wie Triazetin oder Glykole, insbesondere Butylglykol, Butyldiglykol, Butyldipropylenglykol und Butyltripropylenglykol, Netzmittel, allgemein Tenside, Verdicker wie Polyacrylate, Polyurethane, Celluloseether oder Polyvinylalkohole, Entschäumer, Klebrigmacher oder andere zur Formulierung von Klebstoffen übliche Zusätze. Der Anteil dieser Zusätze kann beispielsweise bis zu 40 Gew.-%, vorzugsweise 0 bis 25 Gew.-%, mehr bevorzugt 1 bis 15 Gew.-%, besonders bevorzugt 1 bis 10 Gew.-% und am meisten bevorzugt 1 bis 5 Gew.-%, je bezogen auf das Trockengewicht der Dispersionsklebstoffe.

Die Herstellung der Dispersionsklebstoffe kann nach den hierfür gängigen Verfahren erfolgen, im Allgemeinen durch Mischen der vorgenannten Komponenten. Das Mischen kann in herkömmlichen Mischern erfolgen, wie beispielsweise Rührwerken oder Dissolvern. Das Mischen erfolgt vorzugsweise bei Temperaturen von 5 bis 50°C, besonders bevorzugt 15 bis 40°C und am meisten bevorzugt 20 bis 30°C.

Die erfindungsgemäßen Dispersionsklebstoffe können in den gängigen maschinellen Auftragsverfahren für Dispersionsklebstoffe eingesetzt werden, wie beispielsweise in Düsen- oder Walzen-Auftragsverfahren. Die Dispersionsklebstoffe werden dabei auf Substrate aufgetragen. Der Auftrag kann kontinuierlich, strichförmig oder punktuell erfolgen. Hierbei eignen sich die erfindungsgemäßen Dispersionsklebstoffe für die Verklebung unterschiedlicher Substrate, vorzugsweise Papier, Pappe, Holz, Fasermaterialien, beschichtete Kartons sowie zur Verklebung cellulosischer Materialien mit Kunststoffen, wie Polymerfolien, beispielsweise Polyethylen-, Polyvinylchlorid, Polyamid, Polyester- oder Polystyrol-Folien. Verwendung finden die Dispersionsklebstoffe insbesondere als Papierklebemittel, Verpackungsklebstoffe, Holzklebstoffe und Klebemittel für gewebte und nichtgewebte Fasermaterialien. Besonders geeignet sind die Dispersionsklebstoffe für die Verklebung von cellulosischen Substraten, insbesondere Papier, Pappe oder Baumwollgewebe, jeweils mit Kunststofffolien, oder für die Verklebung von Kunststofffolien miteinander (Folie/Folie-Verklebung).

Die erfindungsgemäßen Dispersionsklebstoffe sind bestens für die Applikation mittels maschineller Auftragsverfahren geeignet. So kann das Auftreten unerwünschter Klebstoffabscheidungen an der Auftragsdüse oder unkontrollierter "Spritzer" mit den erfindungsgemäßen Dispersionsklebstoffen im gewünschten Maß vermieden werden. Die Dispersionsklebstoffe zeigen vorteilhafte rheologische Eigenschaften, wie eine geringe Scherverdünnung. Mit den erfindungsgemäßen Dispersionsklebstoffen kann auch die bei maschinellen Verfahren geforderte, schnelle Abbindegeschwindigkeit erreicht werden. Die Dispersionsklebstoffe sind auch lagerstabil. Überraschend war auch, dass bei der erfindungsgemäßen Vorgehensweise auf den Zusatz von Emulgatoren zu den Dispersionsklebstoffen bzw. Polyvinylesterdispersionen verzichtet kann, und dennoch die gewünschten anwendungstechnischen Eigenschaften erzielt werden können.

Die nachfolgenden Beispiele dienen der weiteren Erläuterung der Erfindung.

Die im Folgenden für Polyvinylalkohole angegebenen Höpplerviskositäten wurden bei 20°C in 4%iger wässriger Lösung gemäß DIN 53015 bestimmt. Die Brookfield-Viskositäten (BF20) der wässrigen Polyvinylesterdispersionen wurden beim jeweils angegebenen Feststoffgehalt bei 23°C mit einem Brookfield Viskosimeter bei 20 Upm bestimmt.

### Beispiel 1 (Bsp.1):

In einem Druckreaktor mit einem Volumen von 600 Liter wurden folgende Komponenten vorgelegt:
115 kg Wasser,
66 kg einer 10%igen wässrigen Lösung des Polyvinylalkohols mit einem Hydrolysegrad von 88% und einer Viskosität nach Höppler einer 4%igen wässrigen Lösung von 23 mPas (523),
11 kg einer 8,5%igen wässrigen Lösung des Polyvinylalkohols mit einem Hydrolysegrad von 88% und einer Viskosität nach Höppler einer 4%igen wässrigen Lösung von 40 mPas (540),
25 kg einer 20%igen wässrigen Lösung des Polyvinylalkohols mit einem Hydrolysegrad von 88% und einer Viskosität nach Höppler einer 4%igen wässrigen Lösung von 5 mPas (205),
240 g Ameisensäure 98%ig,
140 g Eisen(II)ammoniumsulfatlösung (10%ig in Wasser).

Der Druckreaktor wurde evakuiert und anschließend wurden zur Vorlage 200 kg Vinylacetat gegeben. Danach wurde der Reaktor auf 50°C aufgeheizt und mit einem Ethylendruck von 40 bar beaufschlagt (entsprechend einer Menge von 43 kg Ethylen).
Die Polymerisation wurde durch Start der Dosierung einer 3%igen wässrigen Wasserstoffperoxidlösung mit einer Rate von 350 g/h und einer 10%igen wässrigen Na-Hydroxymethansulfinatlösung (Brüggolit) mit einer Rate von 480 g/h gestartet. Mit Polymerisationsbeginn wurde die Temperatur von 50°C auf 70°C erhöht. 60 Minuten nach Polymerisationsbeginn wurde Vinylacetat mit einer Rate von 23 kg/h für 1,5 Stunden zudosiert. Nach Ende der Vinylacetatdosierung wurden die Dosierungen der Wasserstoffperoxidlösung und der Na-Hydroxymethansulfinatlösung für weitere 60 Minuten fortgesetzt. Die Gesamtpolymerisationszeit betrug 3,5 Stunden.
Die so erhaltene Polymerdispersion wurde anschließend in einen Drucklosreaktor überführt. Am Drucklosreaktor wurde ein Druck von 0,7 mbar angelegt. In den Drucklosreaktor wurden 880 g einer 10%igen wässrigen tert-Butylhydroperoxidlösung und 580 kg einer wässrigen 10%igen Na-Hydroxymethansulfinatlösung (Brüggolit) gegeben, und es wurde nachpolymerisiert. Der pH-Wert wurde durch Zugabe von wässriger Natronlauge (10%ig) auf 4,5 eingestellt. Schließlich wurde der Ansatz mit einem Sieb mit einer Maschenweite von 150 µm filtriert.
Die Eigenschaften der Polymerdispersion sind in Tabelle 1 aufgeführt.

### Beispiele 2 bis 4 (Bsp. 2 bis 4):

Die Polymerisation erfolgt analog zu Beispiel 1, wobei die in Tabelle 1 angegebenen Polyvinylalkohol-Zusammensetzungen eingesetzt werden.

Die Eigenschaften der Polymerdispersionen sind in Tabelle 1 aufgeführt.

### Vergleichsbeispiel 5 (VBsp.5):

In einem Druckreaktor mit einem Volumen von 600 Liter wurden folgende Komponenten vorgelegt:
125 kg Wasser,
66 kg einer 10%igen wässrigen Lösung des Polyvinylalkohols mit einem Hydrolysegrad von 88% und einer Viskosität nach Höppler einer 4%igen wässrigen Lösung von 23 mPas (523),
25 kg einer 20%igen wässrigen Lösung des Polyvinylalkohols mit einem Hydrolysegrad von 88% und einer Viskosität nach Höppler einer 4%igen wässrigen Lösung von 5 mPas (205),
240 g Ameisensäure 98%ig,
140 g Eisen(II)ammoniumsulfatlösung (10%ig in Wasser).

Der Druckreaktor wurde evakuiert und anschließend wurden zur Vorlage 200 kg Vinylacetat gegeben. Danach wurde der Reaktor auf 50°C aufgeheizt und mit einem Ethylendruck von 40 bar beaufschlagt (entsprechend einer Menge von 43 kg Ethylen).

Die Polymerisation wurde durch Start der Dosierung einer 3%igen wässrigen Wasserstoffperoxidlösung mit einer Rate von 350 g/h und einer 10%igen wässrigen Na-Hydroxymethansulfinatlösung (Brüggolit) mit einer Rate von 480 g/h gestartet. Mit Polymerisationsbeginn wurde die Temperatur von 50°C auf 70°C erhöht. 60 Minuten nach Polymerisationsbeginn wurde Vinylacetat mit einer Rate von 23 kg/h für 1,5 zudosiert. Nach Ende der Vinylacetatdosierung wurden die Dosierungen der Wasserstoffperoxidlösung und der Na-Hydroxymethansulfinatlösung für weitere 60 Minuten fortgesetzt. Die Gesamtpolymerisationszeit betrug 3,5 Stunden. Die so erhaltene Polymerdispersion wurde anschließend in einen Drucklosreaktor überführt. Am Drucklosreaktor wurde ein Druck von 0,7 mbar angelegt. In den Drucklosreaktor wurden 880 g einer 10%igen wässrigen tert-Butylhydroperoxidlösung und 580 kg einer wässrigen 10%igen Na-Hydroxymethansulfinatlösung (Brüggolit) gegeben, und es wurde nachpolymerisiert. Der pH-Wert wurde durch Zugabe von wässriger Natronlauge (10%ig) auf 4,5 eingestellt. Schließlich wurde der Ansatz mit einem Sieb mit einer Maschenweite von 150 µm filtriert.

Die Eigenschaften der Polymerdispersion sind in Tabelle 1 aufgeführt.

### Vergleichsbeispiel 6 (VBsp.6):

Die Polymerisation erfolgt analog zu Vergleichsbeispiel 5, wobei die in Tabelle 1 angegebenen Polyvinylalkohol-Zusammensetzungen eingesetzt werden.

Die Eigenschaften der Polymerdispersionen sind in Tabelle 1 aufgeführt.

**Tabelle 1: Eigenschaften der Polymerdispersionen:**

| | Polyvinylalkohol | | | Festgehalt [%] | BF20 [mPas] | pH |
|---|---|---|---|---|---|---|
| | 205^{a)} [Gew.-%]^{d)} | 523^{b)} [Gew.-%]^{d} | 540^{c)} [Gew.-%]^{d)} | | | |
| Bsp.1 | 2,1 | 2,8 | 0,4 | 55,1 | 14880 | 5,2 |
| Bsp.2 | 2,1 | 3,0 | 0,2 | 54,4 | 12540 | 5,0 |
| Bsp.3 | 2,1 | 2,7 | 0,3 | 55,2 | 11000 | 4,5 |
| Bsp.4 | 2,7 | 2,1 | 0,3 | 56,1 | 15000 | 4,5 |
| VBsp.5 | 2,1 | 2,8 | 0 | 55,4 | 7200 | 4,3 |
| VBsp.6 | 2,1 | 3,1 | 0 | 55,1 | 8760 | 4,5 |

| | | | | | | |
|---|---|---|---|---|---|---|
| a) Polyvinylalkohol mit einem Hydrolysegrad von 88 Mol-% und einer Höpplerviskosität von 5 mPas; b) Polyvinylalkohol mit einem Hydrolysegrad von 88 Mol-% und einer Höpplerviskosität von 23 mPas; c) Polyvinylalkohol mit einem Hydrolysegrad von 88 Mol-% und einer Höpplerviskosität von 40 mPas; d) Angaben in Gew.-% beziehen sich auf die insgesamt eingesetzte Menge an Vinylacetat. | | | | | | |

### Düsenauftragsverfahren: Bestimmung des Stegaufbaus:

Die Dispersionsklebstoffe wurden mittels Düsenauftrag auf eine rotierende Edelstahlwalze appliziert. Die Edelstahlwalze hatte einen Umfang von 80 cm und rotierte mit einer Geschwindigkeit von 120 bzw. 140 Umdrehungen/min (UPM) um ihre eigene Achse. Die Dispersionsklebstoffe wurden mit einem HHS Auftragssystem mit Ventilen des Typs GKD4-114-2m und Düsen des Typs LVK-4 appliziert. Die Düsen waren in einem Abstand von 4 mm senkrecht über der Walzenoberfläche angebracht.

Die Dispersionsklebstoffe waren durch Verdünnen mit Wasser auf eine Viskosität von 800 mPas eingestellt und wurden über Schlauchleitungen mittels einer Kolbenpumpe unter Anwendung eines Drucks von 9 bar den Düsen zugeführt. Der Auftrag der Dispersionsklebstoffe durch die Düsen auf die Edelstahlwalze erfolgte gepulst, indem die Düsen mit gleichbleibendem Rhythmus geöffnet und wieder verschlossen wurden. Ein Zyklus aus einmaligem Öffnen und Schließen der Düse wird als Puls bezeichnet. Es wurden 18 Pulse der Düse pro Umdrehung der Edelstahlwalze eingestellt. Von der Edelstahlwalze wurden die Dispersionsklebstoffe mit einem Plastikrakel gleich wieder abgeschabt. Die Austestung erfolgte im Normklima bei 23°C und einer relativen Luftfeuchtigkeit von 50%.

120 min nach Beginn der Düsenapplikation wurde die Größe des zapfenförmigen Aufbaus (Stegaufbau) an der Düse gemessen. Die Ergebnisse der Austestung sind in Tabelle 2 aufgeführt.

Wenn der zapfenförmige Aufbau bereits vor Ablauf der 120 min fast bis zur Walzenoberfläche reichte, wurde die Austestung abgebrochen und als Messwert > 4 mm angegeben.

**Tabelle 2: Ergebnis der Austestung:**

| | Stegaufbau [mm] | |
|---|---|---|
| | bei 120 Upm | bei 140 Upm |
| Bsp.1 | 2 | 2,5 |
| Bsp.2 | 3 | 3,5 |
| Bsp.3 | 2,5 | 3 |
| Bsp.4 | 1,5 | 2 |
| VBsp.5 | > 4 | > 4 |
| VBsp.6 | > 4 | > 4 |

Bei den erfindungsgemäßen Beispielen 1 bis 4 beträgt der Stegaufbau für alle geprüften Geschwindigkeiten (120 Upm, 140 Upm) nach der Applikationszeit von 120 min maximal 3,5 mm, wohingegen die Vergleichsbeispiele 5 und 6 bereits nach weniger als 120 min einen unzureichenden Maximalwert von 4 mm erreichen, sodass die Düsenapplikation abgebrochen werden musste. Demnach sind die erfindungsgemäßen Dispersionsklebstoffe hinsichtlich ihrer Eignung zur Düsenapplikation gegenüber den Vergleichsbeispielen deutlich vorteilhafter.

## Patentansprüche

1. Verfahren zum Applizieren von Klebstoffen in Form von wässrigen Dispersionen enthaltend ein oder mehrere Polyvinylester und gegebenenfalls ein oder mehrere Zusatzstoffe mittels maschineller Auftragsverfahren, **dadurch gekennzeichnet, dass** die Polyvinylester mit mindestens zwei Polyvinylalkoholen stabilisiert sind, wobei
mindestens ein Polyvinylalkohol eine Viskosität von 36 bis 60 mPas ein hochviskoser Polyvinylalkohol, und mindestens ein Polyvinylalkohol eine Viskosität von 19 bis 35 mPas ein mittleviskoser Polyvinylalkohol, hat gemäß Bestimmung der Viskositäten der Polyvinylalkohole nach der Methode nach Höppler gemäß DIN 53015, bei 20°C, in 4 %iger wässriger Lösung.

2. Polyvinylester in Form von wässrigen Dispersionen oder in Wasser redispergierbaren Pulvern, **dadurch gekennzeichnet, dass** die Polyvinylester erhältlich sind mittels radikalisch initiierter Polymerisation von Monomeren bestehend aus
a) einem oder mehreren Vinylestern,
gegebenenfalls b1) einem oder mehreren Olefinen, gegebenenfalls b2) einem oder mehreren ethylenisch ungesättigten Monomeren ausgewählt aus der Gruppe bestehend aus (Meth)acrylsäureestern, Vinylaromaten, 1,3-Dienen und Vinylhalogeniden und
gegebenenfalls 0 bis 10 Gew.-%, bezogen auf das Gesamtgewicht der Monomere, Hilfsmonomeren ausgewählt aus der Gruppe bestehend aus ethylenisch ungesättigten Mono- und Dicarbonsäuren, ethylenisch ungesättigten Carbonsäurenitrilen, Mono- und Diestern der Fumarsäure und Maleinsäure, ethylenisch ungesättigten Sulfonsäuren oder deren Salze, mehrfach ethylenisch ungesättigten Comonomeren, epoxidfunktionellen Comonomeren, siliciumfunktionellen Comonomeren, Hydroxyethyl-, Hydroxypropyl- oder Hydroxybutylacrylat und -methacrylat, Diacetonacrylamid, Acetylacetoxyethylacrylat und Acetylacetoxyethylmethacrylat, wobei die Polyvinylester mit mindestens zwei Polyvinylalkoholen stabilisiert sind, wobei
mindestens ein Polyvinylalkohol eine Viskosität von 36 bis 60 mPas (hochviskoser Polyvinylalkohol) und
mindestens ein Polyvinylalkohol eine Viskosität von 19 bis 35 mPas (mittelviskoser Polyvinylalkohol) hat,
wobei sämtliche mittelviskose Polyvinylalkohole einen Verseifungsgrad von ≤ 94% haben und 1 bis 30 Gew.-%, bezogen auf das Gesamtgewicht der Polyvinylalkohole, hochviskose Polyvinylalkohole sind gemäß Bestimmung der Viskositäten der Polyvinylalkohole nach der Methode nach Höppler gemäß DIN 53015, bei 20°C, in 4 %iger wässriger Lösung.

3. Verfahren zum Applizieren von Klebstoffen gemäß Anspruch 1, **dadurch gekennzeichnet, dass** der Anteil der hochviskosen Polyvinylalkohole 1 bis 30 Gew.-% beträgt, bezogen auf das Gesamtgewicht der Polyvinylalkohole.

4. Verfahren zum Applizieren von Klebstoffen oder Polyvinylester in Form von wässrigen Dispersionen oder in Wasser redispergierbaren Pulvern gemäß Anspruch 1 bis 3, **dadurch gekennzeichnet, dass** der Anteil der mittelviskosen Polyvinylalkohole 30 bis 99 Gew.-% beträgt, bezogen auf das Gesamtgewicht der Polyvinylalkohole.

5. Verfahren zum Applizieren von Klebstoffen oder Polyvinylester in Form von wässrigen Dispersionen oder in Wasser redispergierbaren Pulvern gemäß Anspruch 1 bis 4, **dadurch gekennzeichnet, dass** die Gesamtmenge an hochviskosen Polyvinylalkoholen und mittelviskosen Polyvinylalkoholen 0,6 bis 6 Gew.-% beträgt, bezogen auf das Trockengewicht der Polyvinylester.

6. Verfahren zum Applizieren von Klebstoffen oder Polyvinylester in Form von wässrigen Dispersionen oder in Wasser redispergierbaren Pulvern gemäß Anspruch 1 bis 5, **dadurch gekennzeichnet, dass** die Polyvinylester mit mindestens einem hochviskosen Polyvinylalkohol, mindestens einem mittelviskosen Polyvinylalkohol und mindestens einem niederviskosen Polyvinylalkohol stabilisiert sind, wobei niederviskose Polyvinylalkohole Viskositäten von 1 bis 18 mPas haben bestimmt nach der Methode nach Höppler gemäß DIN 53015, bei 20°C, in 4 %iger wässriger Lösung.

7. Verfahren zum Applizieren von Klebstoffen oder Polyvinylester in Form von wässrigen Dispersionen oder in Wasser redispergierbaren Pulvern gemäß Anspruch 6, **dadurch gekennzeichnet, dass** der Anteil der niederviskosen Polyvinylalkohole 0 bis 60 Gew.-% beträgt, bezogen auf das Gesamtgewicht der Polyvinylalkohole.

8. Verfahren zum Applizieren von Klebstoffen oder Polyvinylester in Form von wässrigen Dispersionen oder in Wasser redispergierbaren Pulvern gemäß Anspruch 1 bis 7, **dadurch gekennzeichnet, dass** die Dispersionsklebstoffe und die Polyvinylester in Form von wässrigen Dispersionen oder in Wasser redispergierbaren Pulver keinen Emulgator enthalten.

9. Verfahren zum Applizieren von Klebstoffen gemäß Anspruch 1 bis 8, **dadurch gekennzeichnet, dass** die Dispersionsklebstoffe in Düsen- oder Walzen-Auftragsverfahren eingesetzt werden.

## Claims

1. Method for applying adhesives in the form of aqueous dispersions comprising one or more polyvinyl esters and optionally one or more additives by machine application methods, **characterized in that** the polyvinyl esters are stabilized with at least two polyvinyl alcohols,
at least one polyvinyl alcohol having a viscosity of 36 to 60 mPas, a high-viscosity polyvinyl alcohol, and
at least one polyvinyl alcohol having a viscosity of 19 to 35 mPas, a medium-viscosity polyvinyl alcohol,
in accordance with determination of polyvinyl alcohol viscosities by the Höppler method of DIN 53015, at 20°C, in 4% strength aqueous solution.

2. Polyvinyl esters in the form of aqueous dispersions or water-redispersible powders, **characterized in that** the polyvinyl esters are obtainable by radically initiated polymerization of monomers consisting of
a) one or more vinyl esters,
optionally b1) one or more olefins,
optionally b2) one or more ethylenically unsaturated monomers selected from the group consisting of (meth)acrylic esters, vinylaromatics, 1,3-dienes, and vinyl halides, and optionally 0 to 10 wt%, based on the total weight of the monomers, of auxiliary monomers selected from the group consisting of ethylenically unsaturated monocarboxylic and dicarboxylic acids, ethylenically unsaturated carbonitriles, monoesters and diesters of fumaric acid and maleic acid, ethylenically unsaturated sulfonic acids or salts thereof, polyethylenically unsaturated comonomers, epoxide-functional comonomers, silicon-functional comonomers, hydroxyethyl, hydroxypropyl or hydroxybutyl acrylate and methacrylate, diacetoneacrylamide, acetylacetoxyethyl acrylate and acetylacetoxyethyl methacrylate,
where the polyvinyl esters are stabilized with at least two polyvinyl alcohols,
at least one polyvinyl alcohol having a viscosity of 36 to 60 mPas (high-viscosity polyvinyl alcohol) and
at least one polyvinyl alcohol having a viscosity of 19 to 35 mPas (medium-viscosity polyvinyl alcohol)
where all of the medium-viscosity polyvinyl alcohols have a degree of hydrolysis of ≤ 94% and 1 to 30 wt%, based on the total weight of the polyvinyl alcohols, are high-viscosity polyvinyl alcohols
in accordance with determination of polyvinyl alcohol viscosities by the Höppler method of DIN 53015, at 20°C, in 4% strength aqueous solution.

3. Method for applying adhesives according to Claim 1, **characterized in that** the fraction of the high-viscosity polyvinyl alcohols is 1 to 30 wt%, based on the total weight of the polyvinyl alcohols.

4. Method for applying adhesives or polyvinyl esters in the form of aqueous dispersions or water-redispersible powders as claimed in Claim 1 to 3, **characterized in that** the fraction of the medium-viscosity polyvinyl alcohols is 30 to 99 wt%, based on the total weight of the polyvinyl alcohols.

5. Method for applying adhesives or polyvinyl esters in the form of aqueous dispersions or water-redispersible powders as claimed in Claim 1 to 4, **characterized in that** the total amount of high-viscosity polyvinyl alcohols and medium-viscosity polyvinyl alcohols is 0.6 to 6 wt%, based on the dry weight of the polyvinyl esters.

6. Method for applying adhesives or polyvinyl esters in the form of aqueous dispersions or water-redispersible powders as claimed in Claim 1 to 5, **characterized in that** the polyvinyl esters are stabilized with at least one high-viscosity polyvinyl alcohol, at least one medium-viscosity polyvinyl alcohol, and at least one low-viscosity polyvinyl alcohol, with low-viscosity polyvinyl alcohols having viscosities of 1 to 18 mPas, determined by the Höppler method to DIN 53015, at 20°C, in 4% strength aqueous solution.

7. Method for applying adhesives or polyvinyl esters in the form of aqueous dispersions or water-redispersible powders as claimed in Claim 6, **characterized in that** the fraction of the low-viscosity polyvinyl alcohols is 0 to 60 wt%, based on the total weight of the polyvinyl alcohols.

8. Method for applying adhesives or polyvinyl esters in the form of aqueous dispersions or water-redispersible powders as claimed in Claim 1 to 7, **characterized in that** the dispersion-based adhesives and the polyvinyl esters in the form of aqueous dispersions or water-redispersible powders comprise no emulsifier.

9. Method for applying adhesives as claimed in Claim 1 to 8, **characterized in that** the dispersion-based adhesives are used in nozzle or roll application methods.

## Revendications

1. Procédé d'application d'adhésifs sous la forme de dispersions aqueuses contenant un ou plusieurs esters polyvinyliques et éventuellement un ou plusieurs additifs au moyen d'un procédé d'application mécanisé, **caractérisé en ce que** les esters polyvinyliques sont stabilisés avec d'au moins deux alcools polyvinyliques, au moins un alcool polyvinylique ayant une viscosité de 36 à 60 mPas (alcool polyvinylique à viscosité élevée) et au moins un alcool polyvinylique ayant une viscosité de 19 à 35 mPas (alcool polyvinylique de viscosité moyenne), selon la détermination des viscosités des alcools polyvinyliques par la méthode de Höppler selon DIN 53015, à 20 °C, dans une solution aqueuse à 4 %.

2. Esters polyvinyliques sous la forme de dispersions aqueuses ou de poudres redispersibles dans de l'eau, **caractérisés en ce que** les esters polyvinyliques peuvent être obtenus par polymérisation initiée radicalairement de monomères, constitués par :
a) un ou plusieurs esters de vinyle,
éventuellement b1) une ou plusieurs oléfines, éventuellement b2) un ou plusieurs monomères éthyléniquement insaturés choisis dans le groupe constitué par les esters de l'acide (méth)acrylique, les composés aromatiques de vinyle, les 1,3-diènes et les halogénures de vinyle, et
éventuellement 0 à 10 % en poids, par rapport au poids total des monomères, de monomères auxiliaires choisis dans le groupe constitué par les acides mono- et dicarboxyliques éthyléniquement insaturés, les nitriles d'acides carboxyliques éthyléniquement insaturés, les mono- et diesters de l'acide fumarique et de l'acide maléique, les acides sulfoniques éthyléniquement insaturés ou leurs sels, les comonomères polyéthyléniquement insaturés, les comonomères à fonction époxyde, les comonomères à fonction silicium, l'acrylate et le méthacrylate d'hydroxyéthyle, d'hydroxypropyle ou d'hydroxybutyle, le diacétonacrylamide, l'acrylate d'acétylacétoxyéthyle et le méthacrylate d'acétylacétoxyéthyle, les esters polyvinyliques étant stabilisés avec au moins deux alcools polyvinyliques,
au moins un alcool polyvinylique ayant une viscosité de 36 à 60 mPas (alcool polyvinylique à viscosité élevée) et au moins un alcool polyvinylique ayant une viscosité de 19 à 35 mPas (alcool polyvinylique de viscosité moyenne),
tous les alcools polyvinyliques de viscosité moyenne ayant un degré de saponification ≤ 94 %, et
1 à 30 % en poids, par rapport au poids total des alcools polyvinylique, étant des alcools polyvinyliques de viscosité élevée, selon la détermination des viscosités des alcools polyvinyliques par la méthode de Höppler selon DIN 53015, à 20 °C, dans une solution aqueuse à 4 %.

3. Procédé d'application d'adhésifs selon la revendication 1, **caractérisé en ce que** la proportion des alcools polyvinyliques de viscosité élevée est de 1 à 30 % en poids, par rapport au poids total des alcools polyvinyliques.

4. Procédé d'application d'adhésifs ou d'esters polyvinyliques sous la forme de dispersions aqueuses ou de poudres redispersibles dans de l'eau selon les revendications 1 à 3, **caractérisé en ce que** la proportion des alcools polyvinyliques de viscosité moyenne est de 30 à 99 % en poids, par rapport au poids total des alcools polyvinyliques.

5. Procédé d'application d'adhésifs ou d'esters polyvinyliques sous la forme de dispersions aqueuses ou de poudres redispersibles dans de l'eau selon les revendications 1 à 4, **caractérisé en ce que** la quantité totale d'alcools polyvinyliques de viscosité élevée et d'alcools polyvinyliques de viscosité moyenne est de 0,6 à 6 % en poids, par rapport au poids sec des esters polyvinyliques.

6. Procédé d'application d'adhésifs ou d'esters polyvinyliques sous la forme de dispersions aqueuses ou de poudres redispersibles dans de l'eau selon les revendications 1 à 5, **caractérisé en ce que** les esters polyvinyliques sont stabilisés avec au moins un alcool polyvinylique de viscosité élevée, au moins un alcool polyvinylique de viscosité moyenne et au moins un alcool polyvinylique de viscosité faible, les alcools polyvinyliques de viscosité faible ayant des viscosités de 1 à 18 mPas, déterminées par la méthode de Höppler selon DIN 53015, à 20 °C, dans une solution aqueuse à 4 %.

7. Procédé d'application d'adhésifs ou d'esters polyvinyliques sous la forme de dispersions aqueuses ou de poudres redispersibles dans de l'eau selon la revendication 6, **caractérisé en ce que** la proportion des alcools polyvinyliques de viscosité faible est de 0 à 60 % en poids, par rapport au poids total des alcools polyvinyliques.

8. Procédé d'application d'adhésifs ou d'esters polyvinyliques sous la forme de dispersions aqueuses ou de poudres redispersibles dans de l'eau selon les revendications 1 à 7, **caractérisé en ce que** les adhésifs en dispersion et les esters polyvinyliques sous la forme de dispersions aqueuses ou de poudres redispersibles dans de l'eau ne contiennent pas d'émulsifiant.

9. Procédé d'application d'adhésifs selon les revendications 1 à 8, **caractérisé en ce que** les adhésifs en dispersion sont utilisés dans des procédés d'application à buses ou à cylindres.
